# EUROPEAN PATENT APPLICATION

(11) **EP 4 496 111 A1**
(43) Date of publication of application: **22.01.2025**
(21) Application number: 23843391.6
(22) Date of filing: 19.07.2023
(51) Int. Cl.: H01M 50/538, H01M 10/04

(54) **BATTERY, AND BATTERY PACK AND VEHICLE COMPRISING SAME**

(30) Priority: 19.07.2022 KR 20220089125
(71) Applicant: LG Energy Solution, Ltd., Seoul 07335 (KR)
(72) Inventor: PARK, Sang-Jin, Daejeon 34122 (KR); KIM, Ji-Hwan, Daejeon 34122 (KR); WOO, Jae-Young, Daejeon 34122 (KR); LEE, Kwan-Hee, Daejeon 34122 (KR); LEE, Byoung-Gu, Daejeon 34122 (KR); LEE, Jun-Su, Daejeon 34122 (KR)
(74) Representative: Goddar, Heinz J.
(86) International application number: PCT/KR2023/010443
(87) International publication number: WO 2024/019545

(57) **Abstract**

A battery according to an embodiment of the present disclosure includes an electrode assembly having a winding center hole around which a stack is wound, the stack including a first electrode, a second electrode and a separator interposed between the first electrode and the second electrode; a housing accommodating the electrode assembly through an open portion on a side; and a current collector having a current collector hole having a larger diameter than a diameter of the winding center hole and disposed at a location corresponding to the winding center hole, and the current collector coupled to a surface of the electrode assembly on the side of the open portion of the housing.

## Description

### TECHNICAL FIELD

The present disclosure relates to a battery, and a battery pack and a vehicle comprising the same.

The present application claims priority to Korean Patent Application No. 10-2022-0089125 filed on July 19, 2022 in the Republic of Korea, the disclosure of which is incorporated herein by reference.

### BACKGROUND ART

In general, secondary batteries are designed to reduce the internal pressure through gas venting when the internal pressure rises due to defects or failures. When the internal pressure is higher than a predetermined level, proper venting may prevent accidents such as explosion caused by continuous rise in internal pressure.

However, when there are factors that hinder timely venting or structure destruction occurs due to the increased internal pressure, shorts may occur and thermal events may spread, resulting in very low safety of secondary batteries while in use.

In thermal runaway tests for removing the hazard factors, there are short risks, for example, a portion of the electrode assembly may be ejected from a housing after venting.

In the event of thermal runaway, the electrode assembly may be ejected from the housing too quickly, and as a consequence, internal shorts may occur in secondary batteries, or external shorts may occur due to the ejected electrode assembly and/or broken pieces of any other metal component.

Besides, when the electrode assembly is ejected too quickly due to the rise in internal pressure and/or thermal events in the housing, the ejected portion of the electrode assembly may block the gas venting route before gas is vented by the partial rupture of the housing, resulting in poor venting. When proper venting fails, the internal pressure may notably rise, causing explosion.

Accordingly, there is a need for the development of secondary battery structure for preventing or delaying the structural destruction of the electrode assembly caused by the increased internal pressure due to defects or failures in secondary batteries.

### SUMMARY

### Technical Problem

The present disclosure is designed to address the above-described problem, and therefore the present disclosure is directed to preventing or delaying structural destruction of an electrode assembly when rises in internal pressure and/or thermal events occur due to defects or failures in a battery.

However, the technical problem to be solved by the present disclosure is not limited to the above-described problems, and these and other problems will be clearly understood by those skilled in the art from the following description.

### Technical Solution

To solve the above-described problem, a battery according to an embodiment of the present disclosure includes an electrode assembly having a winding center hole around which a stack is wound, the stack including a first electrode, a second electrode and a separator interposed between the first electrode and the second electrode; a housing accommodating the electrode assembly through an open portion on a side; and a current collector having a current collector hole having a larger diameter than a diameter of the winding center hole and disposed at a location corresponding to the winding center hole, and the current collector coupled to a surface of the electrode assembly on the side of the open portion of the housing.

The winding center hole may be located on an inner side of the current collector hole.

A value obtained by dividing a difference between the diameter of the current collector hole and the diameter of the winding center hole by the diameter of the winding center hole may be equal to or larger than 0.015 and smaller than 0.4.

The diameter of the winding center hole may be equal to or larger than 5.0 mm and smaller than 7.0 mm.

A difference between the diameter of the current collector hole and the diameter of the winding center hole may be equal to or larger than 0.1 and smaller than 2.0.

The current collector may be electrically connected to the housing.

The battery may include a cap covering the open portion.

The cap may have a vent that is more vulnerable than a surrounding area to rupture when an internal pressure rises.

Meanwhile, to solve the above-described problem, a battery pack according to an embodiment of the present disclosure includes the battery according to an embodiment of the present disclosure.

To solve the above-described problem, a vehicle according to an embodiment of the present disclosure includes the battery pack according to an embodiment of the present disclosure.

### Advantageous Effects

According to an aspect of the present disclosure, it may be possible to prevent or delay structural destruction of the electrode assembly when rises in internal pressure and/or thermal events occur due to defects or failures in the battery.

However, the advantageous effects obtained through the present disclosure are not limited to the above-described effects, and these and other advantageous effects will be clearly understood by those skilled in the art from the following description.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram showing an open upper portion of a battery according to an embodiment of the present disclosure.
FIG. 2 is a top view showing a combination of an electrode assembly and a current collector of the present disclosure.
FIG. 3 is a diagram showing the increasing normal reaction force with decreasing diameter of a winding center hole of an electrode assembly.
FIG. 4 is a diagram showing the increasing frictional force with increasing normal reaction force at a core of an electrode assembly.
FIGS. 5 to 7 are computed tomography (CT) images showing a change in ejection amount of an electrode assembly as a function of diameter of a winding center hole of the electrode assembly.
FIG. 8 is a diagram showing an upper portion structure of a battery according to an embodiment of the present disclosure.
FIG. 9 is a top view showing a vent in a cap of the present disclosure.
FIG. 10 is a diagram showing a lower portion structure of a battery according to an embodiment of the present disclosure.
FIG. 11 is a diagram showing a battery pack according to an embodiment of the present disclosure.
FIG. 12 is a diagram showing a vehicle according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

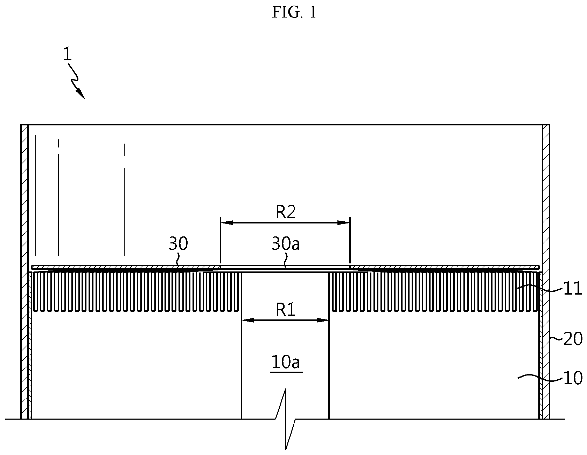

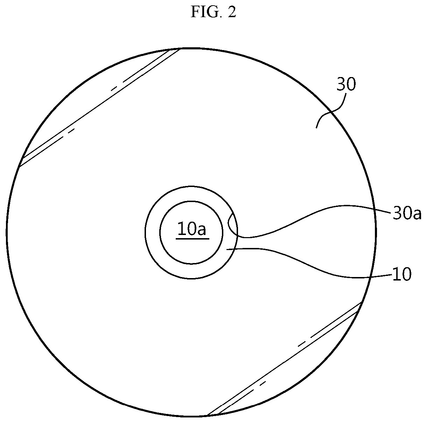

To begin with, a battery 1 according to an embodiment of the present disclosure will be described with reference to FIGS. 1 and 2. FIG. 1 is a diagram showing an open upper portion of the battery according to an embodiment of the present disclosure. FIG. 2 is a top view showing a combination of an electrode assembly and a current collector of the present disclosure.

Referring to FIGS. 1 and 2, the battery 1 according to an embodiment of the present disclosure may be a cylindrical battery. The battery 1 may include an electrode assembly 10, a housing 20 and a current collector (a first current collector) 30.

The electrode assembly 10 may have a winding center hole 10a formed by winding a stack including a first electrode, a second electrode and a separator interposed between the first electrode and the second electrode. The first electrode may have a first uncoated portion 11 along a winding direction at an end portion. In this case, the first uncoated portion 11 may be disposed on a surface of the electrode assembly 10.

The housing 20 may accommodate the electrode assembly 10 through an open portion on a side. Although not shown in FIG. 1, the housing 20 may have a closed portion opposite the open portion. The housing 20 may include a conductive metal. Although FIG. 1 shows that the housing 20 is open on one side, the open portion may be closed by a separate component.

The current collector 30 may be disposed on a surface of the electrode assembly 10 on the side of the open portion of the housing 20. The current collector 30 may be, for example, electrically coupled to the first uncoated portion 11 of the electrode assembly 10. The first uncoated portion 11 may be formed at an end portion of the first electrode of the electrode assembly 10. The first uncoated portion 11 may extend along the winding direction of the electrode assembly 10. The first uncoated portion 11 may be disposed on a surface of the electrode assembly 10, and for example, may extend in the upward direction of the electrode assembly 10. Although not shown in FIG. 1, the current collector 30 may be configured to electrically connect the first electrode of the electrode assembly 10 to the housing 20.

The current collector 30 may have a current collector hole 30a. The current collector hole 30a may be formed at a location corresponding to the winding center hole 10a of the electrode assembly 10. The current collector hole 30a may have a diameter R2 that is larger than a diameter R1 of the winding center hole 10a of the electrode assembly 10.

As shown in FIG. 2, the winding center hole 10a of the electrode assembly 10 may be located on the inner side of the current collector hole 30a. That is, the current collector 30 may be disposed so as not to cover even a portion of the winding center hole 10a of the electrode assembly 10.

According to the above-described configuration of the present disclosure, when the combination of the electrode assembly 10 and the current collector 30 is received in the housing 20 and an electrolyte solution is injected, circulation of the electrolyte solution through the winding center hole 10a may be very good. In another aspect, according to the above-described configuration of the present disclosure, it may be possible to easily perform a process of welding components such as terminals at the closed portion opposite the open portion of the housing 20 by irradiating a laser for welding or inserting an instrument for welding through the winding center hole 10a.

In the case where the current collector 30 covers even a portion of the winding center hole 10a of the electrode assembly 10, it may result in poor flow circulation of the electrolyte solution in the process of injecting the electrolyte solution. In another aspect, in the case where the current collector 30 covers even a portion of the winding center hole 10a of the electrode assembly 10, it may result in a poor welding process through the winding center hole 10a and/or damage to the inner wall of the winding center hole 10a in the welding process.

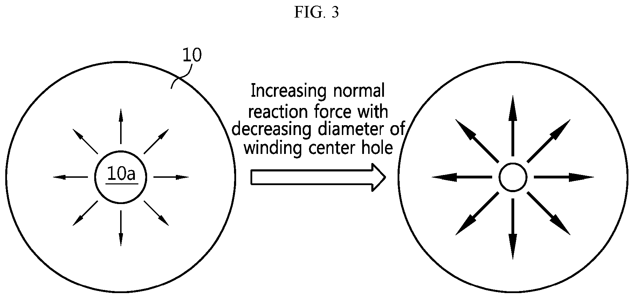

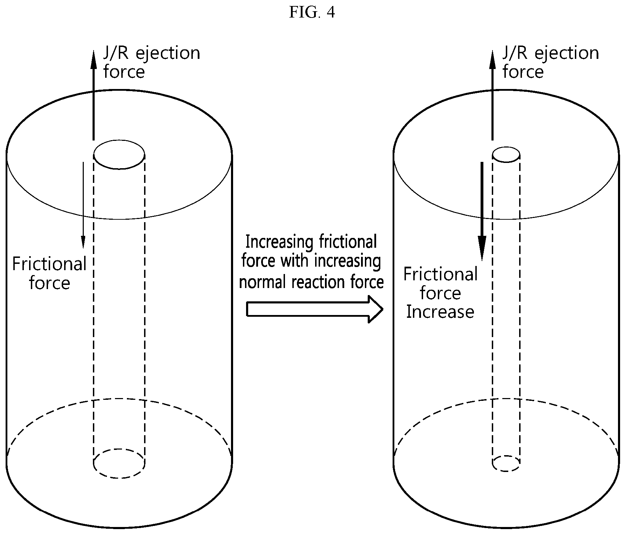

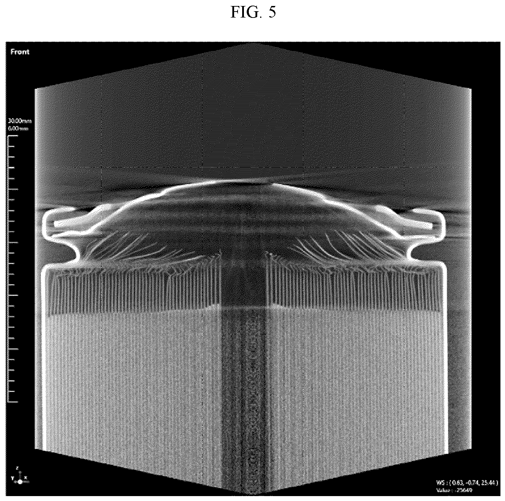

Subsequently, a change in the extent of core deformation of the electrode assembly 10 with a change in diameter of the winding center hole 10a of the electrode assembly 10 will be described with reference to FIGS. 3 to 7 together with FIGS 1 and 2. FIG. 3 is a diagram showing the increasing normal reaction force with decreasing diameter of the winding center hole of the electrode assembly, and FIG. 4 is a diagram showing the increasing frictional force with increasing normal reaction force at the core of the electrode assembly. FIGS. 5 to 7 are computed tomography (CT) images showing a change in ejection amount of the electrode assembly as a function of the diameter of the winding center hole of the electrode assembly.

A core exposure ratio A or a product of dividing a difference between the diameter R2 of the current collector hole 30a and the diameter R1 of the winding center hole 10a of the electrode assembly 10 by the diameter R1 of the winding center hole 10a may be approximately 0.015 to 0.5. The core exposure ratio A may be equal to or larger than approximately 0.015 and smaller than 0.4. The core exposure ratio A may be equal to or larger than approximately 0.072 and smaller than 0.3. The core exposure ratio A may be approximately 0.016 to 0.5. The core exposure ratio A may be equal to or larger than approximately 0.016 and smaller than 0.4. The core exposure ratio A may be equal to or larger than approximately 0.077 and smaller than 0.3. The core exposure ratio A may be approximately 0.016 to 0.416. The core exposure ratio A may be approximately 0.016 to 0.333. The core exposure ratio A may be equal to or larger than approximately 0.077 and smaller than 0.25.

The diameter R1 of the winding center hole 10a may be equal to or larger than approximately 5.0 mm and smaller than 7.0 mm. The diameter R1 of the winding center hole 10a may be equal to or larger than approximately 5.0 mm and smaller than approximately 6.5 mm. The diameter R1 of the winding center hole 10a may be equal to or larger than approximately 6.0 mm and smaller than 6.5 mm.

The difference (R2-R1) between the diameter R2 of the current collector hole 30a and the diameter R1 of the winding center hole 10a may be approximately 0.1 mm to 2.5 mm. The difference (R2-R1) between the diameter R2 of the current collector hole 30a and the diameter R1 of the winding center hole 10a may be equal to or larger than approximately 0.1 mm and smaller than 2.0 mm. The difference (R2-R1) between the diameter R2 of the current collector hole 30a and the diameter R1 of the winding center hole 10a may be equal to or larger than approximately 0.5 mm and smaller than 1.5 mm.

For the above-described numerical range, core deformation suppression of the electrode assembly 10, smooth circulation of the electrolyte solution, easy to perform the welding process and easy to align the current collector 30 and the electrode assembly 10 are taken into account. The influence of the diameter R1 of the winding center hole 10a and the diameter R2 of the current collector hole 30a on the resistive force for the suppression of ejection at the core of the electrode assembly 10 will be described in detail below.

Referring to FIG. 3 together with FIGS. 1 and 2, when the diameter of the winding center hole 10a decreases, the normal reaction force applied outwards from the core of the electrode assembly 10 increases. This is because as the winding center hole 10a of the electrode assembly 10 is smaller, the curvature of the electrode assembly 10 increases, leading to an increase in tension by the restoring force in the wound stack including the first electrode, the second electrode and the separator.

Referring to FIG. 4 together with FIGS. 1 and 2, the resistive force to the ejection force at the core of the electrode assembly 10 increases due to the increasing normal reaction force with the decreasing diameter R1 of the winding center hole 10a. This is because the frictional force between each adjacent layer of the stack including the first electrode, the second electrode and the separator increases with the increasing normal reaction force applied outwards from the core of the electrode assembly 10.

The frictional force between each layer of the stack may act as the resistive force to the ejection force of the core of the electrode assembly 10 caused by the rise in internal pressure of the battery 1. Accordingly, when the frictional force increases, it may be possible to suppress the core ejection of the electrode assembly 10.

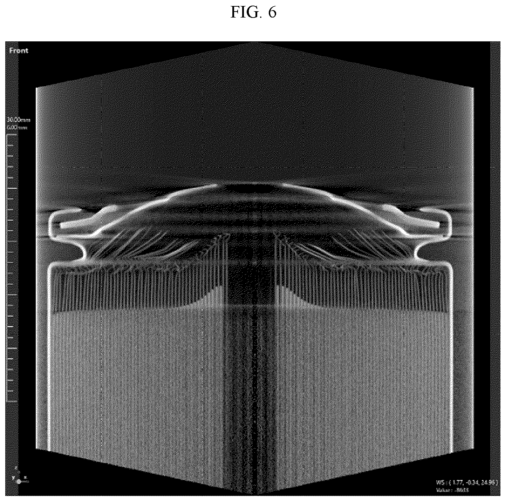

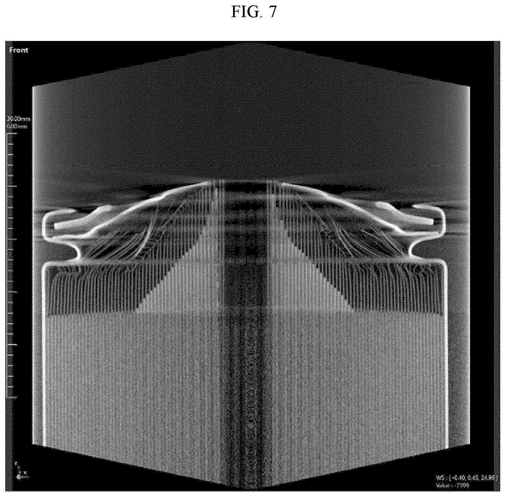

Referring to FIGS. 5 to 7 together with FIGS. 1 and 2, when core ejection of the electrode assembly 10 occurs due to the rise in internal pressure of the battery 1, it can be seen that as the winding center hole 10a of the electrode assembly 10 is smaller, the core ejection length of the electrode assembly 10 towards the open portion of the housing 20 is shorter. In FIG. 5, the diameter R1 of the winding center hole 10a is approximately 6 mm. In FIG. 6, the diameter R1 of the winding center hole 10a is approximately 7 mm. In FIG. 7, the diameter R1 of the winding center hole 10a is approximately 8 mm. In FIGS. 6 and 7, core ejection of the electrode assembly 10 occurs due to thermal events in the battery 1, but the ejected portion is not exposed to the outside of the battery 1. In particular, it can be seen from FIG. 5 that the core ejection length of the electrode assembly 10 is very short. However, it can be seen from FIG. 7 that the core ejection length of the electrode assembly 10 is very long and the electrode assembly 10 was ejected up to a location far away from the core of the electrode assembly 10.

As described above, when the core ejection of the electrode assembly 10 occurs to a great extent, additional thermal events may occur due to shorts caused by unnecessary electrical contact and/or gas venting may be hindered by the ejected portion. Accordingly, to cause the core ejection of the electrode assembly 10 below a predetermined level, it is necessary to adjust the diameter R1 of the winding center hole 10a of the electrode assembly 10 to the proposed level.

Meanwhile, a value obtained by dividing the diameter R1 of the winding center hole 10a by the diameter of the electrode assembly 10 may be approximately 0.109 to 0.159. The value obtained by dividing the diameter R1 of the winding center hole 10a by the diameter of the electrode assembly 10 may be approximately 0.109 to 0.147. The value obtained by dividing the diameter R1 of the winding center hole 10a by the diameter of the electrode assembly 10 may be approximately 0.130 to 0.147.

Meanwhile, a value obtained by dividing the difference between the diameter R2 of the current collector hole 30a and the diameter R1 of the winding center hole 10a by the diameter of the electrode assembly 10 may be approximately 0.002 to 0.056. The value obtained by dividing the difference between the diameter R2 of the current collector hole 30a and the diameter R1 of the winding center hole 10a by the diameter of the electrode assembly 10 may be approximately 0.002 to 0.045. The value obtained by dividing the difference between the diameter R2 of the current collector hole 30a and the diameter R1 of the winding center hole 10a by the diameter of the electrode assembly 10 may be approximately 0.011 to 0.034.

In addition to the absolute values of the diameter R1 of the winding center hole 10a of the electrode assembly 10 and the diameter R2 of the current collector hole 30a, the resistive force for the suppression of core ejection of the electrode assembly 10 may be affected by a ratio of the diameter R1 of the winding center hole 10a to the total diameter of the electrode assembly 10.

The diameter of the electrode assembly 10 of the present disclosure may be, for example, approximately 44 mm to 46 mm.

As described above, when the diameter R1 of the winding center hole 10a is too large, it may result in inadequate suppression of core ejection of the electrode assembly 10 when thermal events occur. Accordingly, in view of this, it is necessary to set the upper limit of the diameter R1 of the winding center hole 10a.

On the contrary, when the diameter R1 of the winding center hole 10a is too small, it may result in poor circulation of the electrolyte solution through the winding center hole 10a and/or it may be difficult to perform the process of welding the components on the opposite side to the open portion of the housing 20 through the winding center hole 10a. In particular, when the welding is performed by laser irradiation through the winding center hole 10a, a sufficient space may be needed for stable incidence of the laser within the winding center hole 10a. Accordingly, in view of this, it is necessary to set the lower limit of the diameter R1 of the winding center hole 10a.

Meanwhile, the diameter R2 of the current collector hole 30a of the current collector 30 may also affect the determination of the resistive force for the suppression of core ejection of the electrode assembly 10.

When the diameter R2 of the current collector hole 30a is too large, there is a reduction in suppression of core ejection of the electrode assembly 10. Accordingly, in view of this, it is necessary to set the upper limit of the difference value between the diameter R2 of the current collector hole 30a and the diameter R1 of the winding center hole 10a.

On the contrary, when the diameter R2 of the current collector hole 30a is too small, it may be difficult to perform the alignment process of placing the winding center hole 10a in the current collector hole 30a. When the winding center hole 10a is not accurately located in the current collector hole 30a, a portion of the winding center hole 10a may be covered by the current collector 30. This may hinder the injection/circulation of the electrolyte solution through the winding center hole 10a and the welding process through the winding center hole 10a. Accordingly, in view of this, it is necessary to set the lower limit of the difference value between the diameter R2 of the current collector hole 30a and the diameter R1 of the winding center hole 10a.

**[Table 1]**

| Hole diameter | Core analysis after venting | |
|---|---|---|
| (TEST 1): | Electrode assembly ejection probability | 100% (4/4ea) |
| R1: 8 mm | Ejection length | about 10 to 20 mm |
| R2-R1: 0.5 mm | | |
| (TEST 2): | Electrode assembly ejection probability | 87.5% (7/8ea) |
| R1: 7 mm | Ejection length | about 0 to 15 mm |
| R2-R1: 0.5 mm | | |
| (TEST 3): | Electrode assembly ejection probability | 0% (0/5ea) |
| R1: 6 mm | Ejection length | 0 mm |
| R2-R1: 0.5 mm | | |
| (TEST 4): | Electrode assembly ejection probability | 100% (4/4ea) |
| R1: 8 mm | Ejection length | about 10 to 20 mm |
| R2-R1: 0.5 mm | | |
| (TEST 5): | Electrode assembly ejection probability | 100% (5/5ea) |
| R1: 7mm | Ejection length | about 5 to 20 mm |
| R2-R1: 1.5 mm | | |
| (TEST 6): | Electrode assembly ejection probability | 0% (0/3ea) |
| R1: 6 mm | Ejection length | 0 mm |
| R2-R1: 2.5 mm | | |
| (TEST 7): | Electrode assembly ejection probability | 83% (5/6ea) |
| R1: 6.5 mm | Ejection length | about 10 to 30 mm |
| R2-R1: 2 mm | | |

Referring to the above Table 1 together with the above-referenced drawings, it can be seen that the results are generally good when the diameter of the winding center hole 10a of the electrode assembly 10 is smaller than approximately 7 mm. That is, it can be seen that in case where the diameter of the winding center hole 10a is smaller than approximately 7 mm, core deformation of the electrode assembly 10 is suppressed when thermal events occur in the battery 1.

Meanwhile, seeing the experimental results shown in Table 1, it can be seen that the core deformation suppression is affected by the difference between the diameter R2 of the current collector hole 30a and the diameter R1 of the winding center hole 10a. It can be seen that when R1 is less than 7 mm and R2-R1 is approximately 2.5 mm or less, it may be possible to achieve adequate core deformation suppression.

However, as shown in TEST 5 and TEST 7, when R1 is 6.5 mm or more but R2-R1 is 2.5 mm or less, core deformation may occur. In view of this, it may be necessary to limit R1 to less than approximately 6.5 mm and/or limit R2-R1 to less than approximately 2.0 mm and/or limit R2-R1 to less than approximately 1.5 mm, to further improve the core deformation suppression effect.

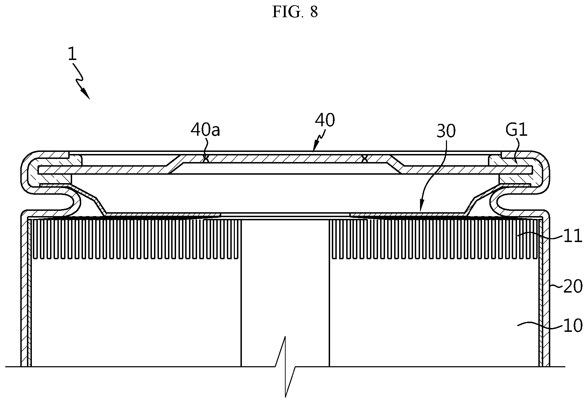

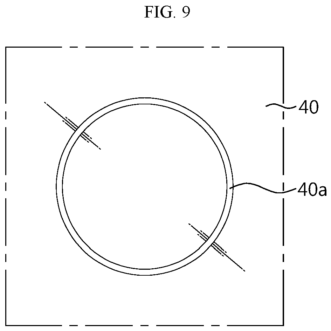

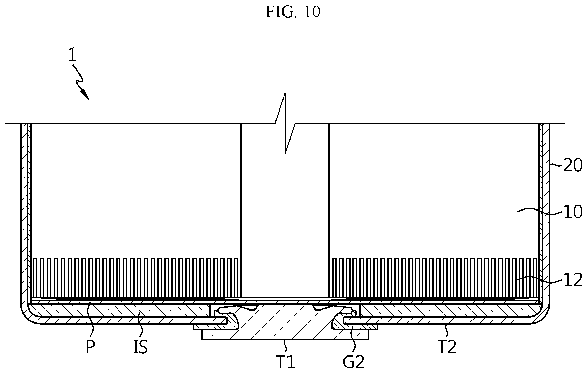

Subsequently, the whole structure of the battery 1 according to an embodiment of the present disclosure will be described with reference to FIGS. 8 to 10. FIG. 8 is a diagram showing an upper portion structure of the battery according to an embodiment of the present disclosure. FIG. 9 is a top view showing the vent in the cap of the present disclosure. FIG. 10 is a diagram showing a lower portion structure of the battery according to an embodiment of the present disclosure.

To begin with, referring to FIGS. 8 and 9, the current collector 30 may be electrically connected to the housing 20. The current collector 30 may be, for example, electrically coupled to a beading portion extending inwards from the outer circumferential surface of the housing 20.

The battery 1 may include a cap 40 to cover the open portion on a side of the housing 20. The cap 40 may be electrically insulated from the electrode assembly 10 and the housing 20, and may not be polar. For example, a first insulation member G1 may be interposed between the cap 40 and the housing 20.

The cap 40 may have a vent 40a configured to rupture when the internal pressure of the battery 1 increases. The vent 40a may be more vulnerable than the surrounding area. For example, the vent 40a may be an area having a smaller thickness than the remaining area of the cap 40. The vent 40a may extend, forming a closed loop in the cap 40 as shown in FIG. 8.

When the battery 1 of the present disclosure includes the cap 40 and the cap 40 has the vent 40a, it is more important to suppress the core ejection of the electrode assembly 10 as described above. In the case where core ejection is not suppressed, before gas is vented by the rupture of the vent 40a of the cap 40, a space between the cap 40 and the current collector 30 may be filled by the ejected core of the electrode assembly 10. In this case, even though the vent 40a ruptures, adequate gas venting may fail, resulting in thermal event spread.

Referring to FIG. 10, the battery 1 may include a first terminal T1. The first terminal T1 may be electrically coupled to a second uncoated portion 12 of the electrode assembly 10. In the similar way to the first uncoated portion 11, the second uncoated portion 12 may be formed at an end portion of the second electrode. The second uncoated portion 12 may extend along the winding direction of the electrode assembly 10. The second uncoated portion 12 may be disposed on the opposite surface to the surface on which the first uncoated portion 11 is present among two surfaces of the electrode assembly 10, and for example, may extend in the downward direction of the electrode assembly 10. A portion of the first terminal T1 may be, for example, inserted into the housing 20 through the closed portion of the housing 20. The first terminal T1 may be electrically insulated from the housing 20. For example, a second insulation member G2 may be interposed between the first terminal T1 and the housing 20. When the first terminal T1 is disposed on the side of the closed portion of the housing 20, the outer surface of the closed portion of the housing 20 may act as a second terminal T2.

The battery 1 may include a current collector (a second current collector) P to electrically connect the first terminal T1 to the electrode assembly 10. The current collector P may be electrically coupled to the first terminal T1. For example, the current collector P and the first terminal T1 may be welded by irradiating a laser or inserting an instrument for welding through the winding center hole 10a of the electrode assembly 10 from the open portion of the housing 20.

When the battery 1 of the present disclosure includes the current collector P, an insulator IS may be interposed between the current collector P and the closed portion of the housing 20. The insulator IS may prevent the contact between the current collector P and the housing 20 having different polarities.

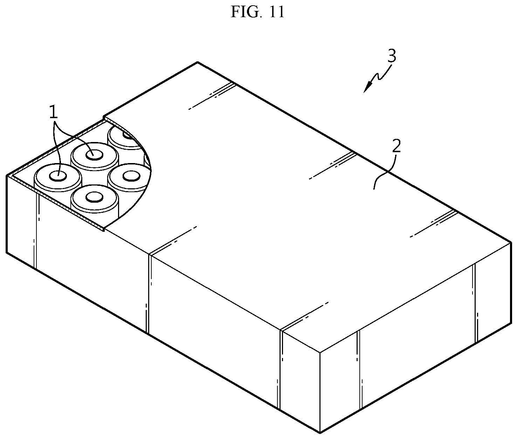

Subsequently, a battery pack 3 according to an embodiment of the present disclosure will be described with reference to FIG. 11. FIG. 11 is a diagram showing the battery pack according to an embodiment of the present disclosure.

Referring to FIG. 11, the battery pack 3 according to an embodiment of the present disclosure may include at least one battery 1 of the present disclosure. The battery 1 may be accommodated in a pack housing 2. The battery pack 3 may include a component for electrical connection between the batteries 1 and/or a Battery management system (BMS) to control the charge and discharge of the battery 1.

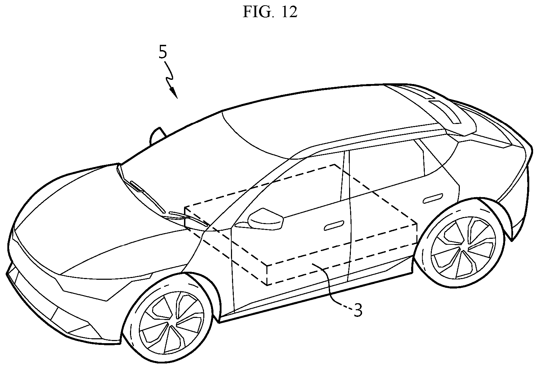

Subsequently, a vehicle 5 according to an embodiment of the present disclosure will be described with reference to FIG. 12. FIG. 12 is a diagram showing the vehicle according to an embodiment of the present disclosure.

Referring to FIG. 12, the vehicle 5 according to an embodiment of the present disclosure includes at least one battery pack 3. The vehicle 5 may be powered by the battery pack 3. The vehicle 5 may be, for example, a hybrid electric vehicle (HEV) or an electric vehicle (EV).

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

### [Description of Reference Numerals]

1: Battery
2: Pack housing
3: Battery pack
5: Vehicle
10: Electrode assembly
11: First uncoated portion
12: Second uncoated portion
10a: Winding center hole
20: Housing
30: Current collector (First current collector)
30a: Current collector hole
40: Cap
40a: Vent
T1: First terminal
T2: Second terminal
P: Current collector (Second current collector)
IS: Insulator

## Claims

1. A battery, comprising:
an electrode assembly having a winding center hole around which a stack is wound, the stack including a first electrode, a second electrode and a separator interposed between the first electrode and the second electrode;
a housing accommodating the electrode assembly through an open portion on a side; and
a current collector having a current collector hole having a larger diameter than a diameter of the winding center hole and disposed at a location corresponding to the winding center hole, and the current collector coupled to a surface of the electrode assembly on the side of the open portion of the housing.

2. The battery according to claim 1, wherein the winding center hole is located on an inner side of the current collector hole.

3. The battery according to claim 1, wherein a value obtained by dividing a difference between the diameter of the current collector hole and the diameter of the winding center hole by the diameter of the winding center hole is equal to or larger than 0.015 and smaller than 0.4.

4. The battery according to claim 1, wherein the diameter of the winding center hole is equal to or larger than 5.0 mm and smaller than 7.0 mm.

5. The battery according to claim 1, wherein a difference between the diameter of the current collector hole and the diameter of the winding center hole is equal to or larger than 0.1 and smaller than 2.0.

6. The battery according to claim 1, wherein the current collector is electrically connected to the housing.

7. The battery according to claim 1, comprising:
a cap covering the open portion.

8. The battery according to claim 7, wherein the cap has a vent that is more vulnerable than a surrounding area to rupture when an internal pressure rises.

9. A battery pack comprising the battery according to any one of claims 1 to 8.

10. A vehicle comprising the battery pack according to claim 9.
